# EUROPEAN PATENT APPLICATION

(11) **EP 4 321 026 A1**
(43) Date of publication of application: **14.02.2024**
(21) Application number: 23189993.1
(22) Date of filing: 07.08.2023
(51) Int. Cl.: A21D 2/18, A21D 2/26, A21D 2/36, A21D 10/04, A21D 13/047, A21D 13/068, A23L 7/117

(54) **FOOD PRODUCT FOR SNACKS AND MANUFACTURING METHOD THEREOF**

(30) Priority: 11.08.2022 IT 202200017190
(71) Applicant: Tarullo, Angelo, 70020 Toritto (Bari) (IT)
(72) Inventor: TARULLO, FRANCESCO ROCCO, 70020 TORITTO (BA) (IT); TARULLO, NICOLA MARIA, 70020 TORITTO (BA) (IT)
(74) Representative: Russo, Dimitri

(57) **Abstract**

Food product for snacks and manufacturing method for a snack whose dough involves the use of durum wheat flour, corn starch, water, salt, extra virgin olive oil, spirulina and inulin.

## Description

The present invention relates to the recipe of a food product for snacks, and manufacturing method thereof, more particularly the invention relates to a food product such as chips, of any shape, such as for example a wafer, a disc, petals, puff pastry or a children's subject shape.

Object of the present invention is to realize *snacks* made of durum wheat flour or, in a variant thereof, of other types of flour, substantially having the shape of a *chips.*

Object of the invention is to provide a healthy *snack* made of wheat, which does not have the drawbacks of analogous snacks cooked by frying.

Another object of the present invention is to provide a snack which does not use artificial colorings since the color is provided directly by the ingredients in the dough.

Furthermore, an object is to provide a snack which does not contain potatoes, low in sodium, which is not fried, which does not contain preservatives and other chemical additives which make it rich in calories and nutritionally unbalanced.

In a preferred embodiment, the standard dough necessary to obtain the food product according to the present invention, mainly consists of flour, even whole wheat flour, obtained from durum wheat.

The recipe provides that, to obtain 1,100 gr. of finished product ready to be eaten, i.e. after cooking, the dough must include:
- 900 g. of durum wheat flour;
- 120 g. of corn starch;
- 1,380 liters of water at 4° - 6° Celsius degrees in all seasons;
- 36 g. of salt;
- 150 g. of organic extra virgin olive oil or, as an alternative, of high oleic organic sunflower oil;
- 48 g. of spirulina;
- 12 g. of organic agave inulin.

The dough does not include added yeasts.

The dough must be mixed until obtaining a semi-liquid batter which will be introduced into a mechanical mixer (mixer) for a time comprised between 12 and 15 minutes in order to eliminate the air bubbles formed during mixing.

The batter is then poured, through a specific measuring cup which generates a drop of product, and based on the size of the drop, the weight and size of the chips to be produced can vary, in molds or directly on a baking tray and cooked in a convection oven at 120 degrees for 25-27 minutes.

After cooking, the *snack* will be inspected to check its surface, shape, diameter, thickness, weight and color, the latter changing according to the substances added.

The flour used can be of durum wheat, like Senatore Cappelli wheat, of an ancient variety of durum wheat like Saragolla wheat, or, as an alternative, of all types of soft wheat flour (including whole wheat flour), including Solina wheat, spelt flour, hemp flour, or other cereals such as rye or vice versa, all gluten-free flours, such as buckwheat flour.

A further variation of the dough provides for the addition of one or more vegetables and/or fruit and/or wild herbs and/or mushrooms and tubers such as Jerusalem artichoke and/or dried fruit, ground into powder or freeze-dried.

Before being added to the mixture, said additional ingredients must be dehydrated by drying and fine-grained into powder.

Yet another variant of the dough, involves the addition of spices such as thyme, marjoram, cinnamon, vanilla, cocoa, rosemary, anise, mint, coriander, parsley, chervil, basil, oregano, chili pepper, pepper, sage, turmeric, saffron, ginger, said spices can be added after being pulverized and/or freeze-dried, or macerated into extra virgin olive oil.

Finally, a further variant involves the addition of honey or milk proteins and cheese or freeze-dried meat or fish.

A reduction equal to 5-8% of the volume expressed in liters of water to be incorporated in the flours is foreseen for flours without or with a low gluten content. The rest of the procedure remains unchanged.

A reduction of 5-8% of the expressed volume is expected for flours without or with a low gluten content.

## Claims

1. Food product for snacks and manufacturing method thereof comprising a dough made of durum wheat or soft wheat flour, including whole wheat flour, water, salt, olive oil, **characterized in that**, in order to obtain 1,100 gr. of finished product ready to be eaten, i.e. after cooking, the dough requires the use of the following ingredients:
- 900 g. of durum wheat flour;
- 120 g. of corn starch;
- 1,380 liters of water at a temperature comprised between 4° - 6° Celsius degrees;
- 36 g. of salt;
- 150 g. of extra virgin olive oil or of high oleic organic sunflower oil;
- from 54 to 64 g. of organic spirulina;
- from 12 to 16 g. of organic agave inulin.

2. Food product for snacks and manufacturing method thereof, according to claim 1, **characterized in that** the dough requires the use of 48 g. of organic spirulina and 12 g. of organic agave inulin.

3. Food product for snacks and manufacturing method thereof, according to the previous claims, **characterized in that** the wheat is Apulian durum wheat, like Senatore Cappelli wheat, an ancient variety of durum wheat like Saragolla wheat, Tritordeum grain, as an alternative, all types of soft wheat flours (including whole wheat flour), such as Solina wheat, spelt flour, hemp flour, or other cereals such as rye or vice versa, all gluten-free flours, such as buckwheat flour.

4. Food product for snacks and manufacturing method thereof, according to the previous claims, **characterized in that** a variant of the dough provides for the addition of one or more vegetables and/or fruit and/or greens and/or wild herbs and/or mushrooms and tubers such as Jerusalem artichoke and/or dried fruit shredded into powder or freeze-dried.

5. Food product for snacks and manufacturing method thereof, according to the previous claims, **characterized in that** a variant of the dough provides for the addition of spices such as thyme, marjoram, cinnamon, vanilla, cocoa, rosemary, anise, mint, coriander, parsley, chervil, basil, oregano, chili pepper, pepper, sage, turmeric, saffron, ginger, said spices can be added after they have been grounded and/or freeze-dried, or macerated into extra virgin olive oil.

6. Food product for snacks and manufacturing method thereof, according to the previous claims, **characterized in that** the dough provides for the addition of honey or milk proteins and cheese or freeze-dried meat or fish.

7. Food product for snacks and manufacturing method thereof, according to the previous claims, **characterized in that** the final shape can be a wafer, a disc, a petal, a puff pastry or a children's subject.

8. Food product for snacks and manufacturing method thereof, according to the previous claims, **characterized in that** the ingredients of the dough can be replaced by technically equivalent elements all falling within the scope of the invention.

9. Manufacturing method of a food product for snacks **characterized in that** the dough is mixed in order to obtain a batter to be introduced into a mechanical mixer, for a time interval comprised between 12 and 15 minutes and subsequently poured, through a measuring cup, on a baking tray or in molds where it will be cooked, in a convection oven, at 120 degrees for about 25 - 27 minutes.
